# EUROPÄISCHE PATENTSCHRIFT

(11) **EP 0 730 101 B1**
(45) Veröffentlichungstag und Bekanntmachung des Hinweises auf die Patenterteilung: **05.08.1998**
(21) Anmeldenummer: 96102138.3
(22) Anmeldetag: 14.02.1996
(51) Int. Cl.: F16B 35/06, F16B 33/00, F16B 43/00

(54) **Verbindungselement**
Fastening element
Dispositif de raccordement

(30) Priorität: 28.02.1995 DE 19506929
(43) Veröffentlichungstag der Anmeldung: 04.09.1996
(73) Patentinhaber: A-Z Ausrüstung und Zubehör GmbH & Co. KG, 45525 Hattingen (DE)
(72) Erfinder: Dicke Robert, D-58256 Ennepetal (DE)
(74) Vertreter: Zapf, Christoph, Dipl.-Ing.

(56) Entgegenhaltungen:
- EP-A- 0 108 533
- FR-A- 2 014 571
- FR-A- 2 492 480
- GB-A- 991 961
- US-A- 3 889 569
- US-A- 4 316 690
- US-A- 4 887 951

## Beschreibung

Die vorliegende Erfindung betrifft ein Verbindungselement, bestehend aus einem Kopf mit einem endseitigen Betätigungsabschnitt aus einem ersten Material und aus einem Verbindungsschaft, wobei der Kopf einen zwischen diesem und dem Verbindungsschaft liegenden, einen Dichtkörper bildenden Abschnitt aufweist, der aus einem zweiten, elastisch verformbaren und dichtenden Material besteht.

Bei der Errichtung von Dach- oder Fassadenkonstruktionen aus Stützen, Trägern, Riegeln und Balken, insbesondere aus Holz oder Metall, und aus auf diesen aufbringbaren Verkleidungselementen, Beplankungen oder Dacheindeckungen aus Metallblech, Kunststoff, oder aus anderen Leichtbauelementen mit ebener oder gewellter Oberfläche ist eine Vielzahl von Schraubenverbindungen zwischen den einzelnen Konstruktionsteilen und den Verkleidungs- bzw. Abdeckelementen erforderlich. Zum Herstellen dieser Schraubenverbindungen werden Metallschrauben, Holzschrauben, selbstschneidende Schrauben oder dergleichen durch die Abdeckelemente hindurch in die Konstruktionsteile eingeschraubt. Wünschenswert ist hierbei, daß das Einschrauben exakt senkrecht zur Oberfläche des Abdeckelementes erfolgt, da dann mittels des Schraubenkopfes und gegebenenfalls vorhandener, untergelegter Dichtungsscheiben eine einwandfreie Abdichtung des Bohrloches erfolgen kann. In vielen Fällen ist aber ein derartiges senkrechtes Einschrauben nicht möglich. Vielmehr erfolgt das Einschrauben schräg zur Oberfläche. Bei einer schrägen Einschraublage der Schraube kann der Schraubenkopf nicht mehr plan aufliegen, vielmehr bildet sich ein keilförmiger Spalt zwischen der Unterseite des Schraubenkopfes und der Oberfläche des Abdeckelementes oder der Oberseite einer Unterlegscheibe bzw. Dichtscheibe. Durch diesen Spalt kann Feuchtigkeit durch das Bohrloch hindurch unter das Abdeckelement eindringen. Hierdurch kann eine Korrosion der Schraube im Bereich des Schraubenschaftes und der Konstruktionsteile verursacht werden. Zudem kann Feuchtigkeit in den Innenraum eindringen.

Ein Verbindungselement der eingangs beschriebenen Art ist aus der FR-A-2 014 571 bekannt. Dieses Dokument beschreibt eine Dichtungsscheiben-Einheit, die aus einem gummiartigen Dichtring und einem zugehörigen starren Ring besteht, die klemmend miteinander verbunden sein können. Für bestimmte Anwendungsfälle kann der starre Ring mit einer einstückig angeformten Kappe versehen sein, um einen Schraubenkopf der Dichtungsscheiben-Einheit zu umschließen. Die Kappe entspricht der polygonalen Form des Schraubenkopfes und kann damit ein Drehwerkzeug aufnehmen. Bei dieser bekannten Dichtungsscheiben-Einheit ist der Dichtkörper mit der als Betätigungsabschnitt dienenden Kappe in radialer Richtung formschlüssig und in Umfangsrichtung kraftschlüssig verbunden. Der Dichtring weist zu diesem Zweck eine Ausnehmung zur Aufnahme eines Ringflansches des starren Rings auf. Durch die Aufnahme des Ringflansches in der Ausnehmung werden der Dichtring und der starre Ring mit der einstückig angeformten Kappe miteinander verbunden. Bei einem schrägen Einschrauben einer solchen Dichtungsscheiben-Einheit können der Dichtring und der starre Ring nur schwer miteinander verbunden werden bzw. können sich, falls sie bereits vor dem Einschrauben miteinander verbunden sind, aufgrund der unterschiedlichen Kraftbeaufschlagung an einander gegenüberliegenden Seiten leicht voneinander lösen.

Weiter von einem Verbindungselement der eingangs beschriebenen Art abweichende Schraubenausführungen bzw. Befestigungselemente sind aus der GB-A-991 961 und der EP-A-0 108 533 bekannt. Bei den Dichtkörpern gemäß dem jeweiligen Anmeldegegenstand dieser Schutzrechte handelt es sich um vom Kopf unterschiedene Dichtungen, also um jeweils separate Teile, die überhaupt nicht form- und/oder materialschlüssig miteinander verbunden und für eine Montage, bei der die eingangs beschriebenen Bedingungen auftreten, kaum geeignet erscheinen.

Letzteres ist auch bei dem Gegenstand der US-A-4 887 951 der Fall, der eine selbstschneidende Schraube mit einem aus zwei Komponenten bestehenden Kopf zum Inhalt hat. Die Schraube umfaßt einen Hauptkörper aus Metall, einen kleinen Kopfteil (Komponente 1) am Ende eines mit Gewinde versehenen Schaftes und den eigentlichen Kopf aus einem synthetischen Harzwerkstoff (Komponente 2) . In einer bevorzugten Ausführung besitzt der Kopf unterseitig eine ringförmige Ausnehmung zur Einlage eines Dichtungsringes. Der Dichtkörper ist mit dem Betätigungsabschnitt (Kopf) in radialer Richtung form- und in Umfangsrichtung kraftschlüssig verbunden. Bei einem schrägen Einschrauben der Schraube können die gleichen Probleme auftreten wie bei der in der FR-A-2 014 571 beschriebenen Dichtungsscheiben-Einheit.

Einen noch weiter von einem Verbindungselement der eingangs beschriebenen Art abweichenden bekannten Anmeldegegenstand stellt eine Befestigeranordnung gemäß der FR-A-2 492 480 dar. Die bekannte Befestigeranordnung besitzt einen Kunststoffkopf sowie einen ersten äußeren Flansch und einen zweiten inneren Flansch. Der zweite Flansch erfüllt die Funktion, eine obere Platte einer aus zwei Körpern bestehenden Anordnung, welche die Neigung hat, beim Einschrauben einer Schraube in die Anordnung das Gewinde zu "erklettern", zu erfassen und sie vom Kopf fernzuhalten. Die Gewinde auf dem Befestiger können dann die Öffnung in der oberen Platte überdrehen, so daß diese in ihre ursprüngliche Lage, angrenzend an den zweiten Körper, zurückkehren kann. Der zweite Flansch verhindert eine Beschädigung des Kunststoffkopfes, die durch Reibungswärme entstehen könnte. Die beiden Flansche sind mit dem Betätigungsabschnitt des Kopfes einstückig ausgebildet. Beide Flansche werden zwar als Dichtungsflansche bezeichnet, jedoch kommt dem zweiten, inneren nahezu ausschließlich eine Haltefunktion gegen das "Klettern" der Platte zu. Schon die Auswahl des Materials für die Flansche zeigt, daß bei schrägem Einbau die beschriebene Befestigeranordnung mit dem Kunststoffkopf kaum in der Lage ist, einen sich bildenden Spalt wirkungsvoll, d.h. auch gegen Feuchtigkeit, abzudichten. Die Flansche können vom Standpunkt der Dichtungstechnik her höchstens als Abstreifer angesehen werden, die Schmutzpartikel zurückhalten. Infolgedessen wird, wie in der FR-A-2 492 480 beschrieben ist, eine weitere, separate Dichtungsscheibe notwendig, die dann die Funktion der Abdichtung in vollem Maß erfüllen soll, jedoch eine Spaltbildung bei schräger Montage nicht verhindert.

Der Erfindung liegt das Problem zugrunde, die Abdichtfunktion eines Verbindungselementes der eingangs genannten Art im Bereich zwischen dem Schraubenkopf und dem Bohrloch bei schrägen Einschraubstellungen der Schraube zu verbessern.

Dieses Problem wird erfindungsgemäß dadurch gelöst, daß der Dichtkörper mit dem Betätigungsabschnitt zumindest in Umfangsrichtung gesehen derart formschlüssig und/oder materialschlüssig verbunden ist, daß sich zwischen dem Betätigungsabschnitt und dem Dichtkörper durch Krafteinwirkung und Materialablösung kein Spalt bilden kann.

Entsprechend der Erfindung ist der Dichtkörper derart dimensioniert, daß auch bei größeren Abweichungen von der Senkrechten in der Einschraubstellung eine das Bohrloch umfassende, vollflächige Auflage des Dichtkörpers gegeben ist. Der Dichtungskörper ist erfindungsgemäß mit dem Betätigungsabschnitt einerseits im Hinblick auf eine Drehmitnahme fest verbunden, und andererseits kann auch bei den zwischen dem Betätigungsabschnitt und dem Dichtkörper auftretenden Kräften durch Scherung und Materialablösung keine Trennung erfolgen. Vorteilhafterweise besteht der Betätigungsabschnitt aus Hartkunststoff und der Dichtkörper aus Weichkunststoff.

Vorteilhafte Ausführungen der Erfindung sind in den Unteransprüchen enthalten. Anhand des in der beiliegenden Zeichnung dargestellten Ausführungsbeispiels wird die Erfindung näher erläutert. Es zeigen:
- Fig. 1: eine Seitenansicht einer erfindungsgemäßen Schraube, wobei der Schraubenkopf im Schnitt dargestellt ist,
- Fig. 2: einen Schnitt entlang der Schnittlinie II-II in Fig. 1 und
- Fig. 3: einen Schnitt entlang der Schnittlinie III-III in Fig. 1, jedoch ohne der Darstellung des Dichtkörpers.

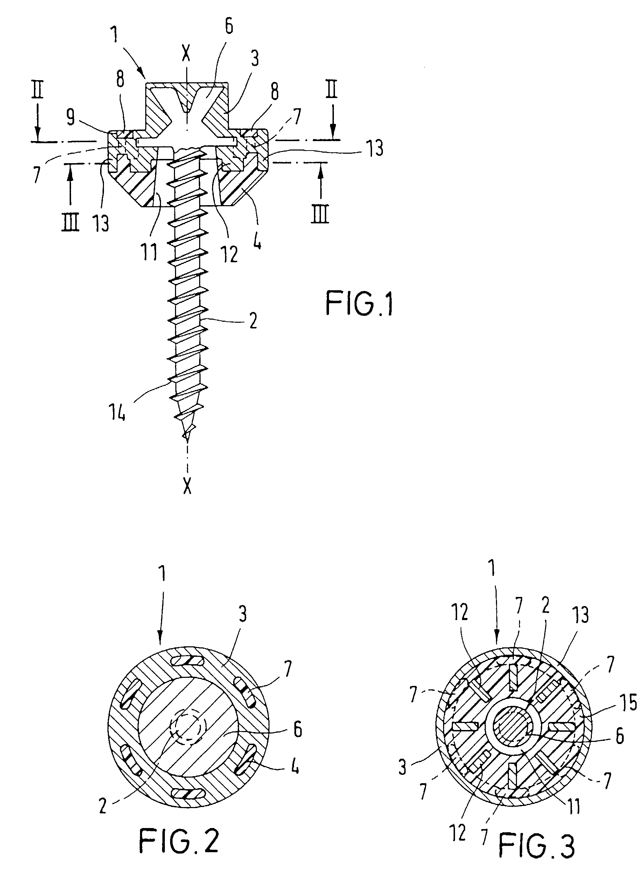

Wie in Fig. 1 dargestellt ist, besteht ein als Schraube ausgebildetes erfindungsgemäßes Verbindungselement aus einem Schraubenkopf 1 und einem Schraubenschaft 2. Der Schraubenkopf 1 weist einen endseitigen Betätigungsabschnitt 3 sowie einen zwischen diesem und dem Schraubenschaft 2 liegenden, einen Dichtkörper 4 bildenden Abschnitt, auf. Der Dichtkörper 4 besteht aus einem elastisch verformbaren und dichtenden Material. Hierbei handelt es sich zweckmäßigerweise um einen Weichkunststoff, insbesondere einem thermoplastischen Kunststoff. Der Betätigungsabschnitt 3 ist vorteilhafterweise aus einem Hartkunststoff, vorzugsweise Polypropylen, hergestellt. Die Verbindung des Betätigungsabschnittes 3 mit dem Schraubenschaft 2 erfolgt formschlüssig, indem der Betätigungsabschnitt 3 einen am Schraubenschaft 2 angeformten Verankerungsabschnitt 6 umfaßt. Zweckmäßigerweise wird der Betätigungsabschnitt 3 auf den Verankerungsabschnitt 6 aufgespritzt. Der Verankerungsabschnitt 6 ist dabei derart ausgebildet, daß eine optimale Kraftübertragung zwischen dem Betätigungsabschnitt 3 und dem Verankerungsabschnitt 6 erfolgt.

Der Dichtkörper 4 ist mit dem Betätigungsabschnitt 3, zumindest in Umfangsrichtung gesehen, formschlüssig verbunden, so daß eine Drehmitnahme des Dichtkörpers 4 bei der Ausübung eines Drehmomentes auf den Betätigungsabschnitt 3 beim Einschrauben, bzw. Ausschrauben der Schraube, erfolgt. Hierdurch wird das Auftreten von Scherkräften im Grenzflächenbereich zwischen dem Betätigungsabschnitt 3 und dem Dichtkörper 4 reduziert. Weiterhin ist es erfindungsgemäß wesentlich, daß zwischen den anliegenden Flächen des Betätigungsabschnittes 3 und des Dichtkörpers 4 eine materialschlüssige Verbindung gegeben ist, so daß sich in diesem Grenzflächenbereich kein Spalt ausbilden kann. Diese materialschlüssige Verbindung kann beispielsweise schon durch eine starke Adhäsion zwischen den beiden Teilen erreicht werden. Alternativ oder zusätzlich kann es vorteilhaft sein, wenn der Dichtkörper 4 mit dem Betätigungsabschnitt verklebt ist. Wie insbesondere aus den Figuren 1 und 2 zu erkennen ist, ist der Dichtkörper 4 an den Betätigungsabschnitt 3 angespritzt. Der Betätigungsabschnitt 3 besitzt konzentrisch zur Mittel-Längsachse X-X der Schraube vorzugsweise kreisförmig angeordnete, axial verlaufende Durchbrüche 7, siehe Figuren 2 und 3. Durch diese Durchbrüche 7 hindurch wird das Material des Dichtkörpers 4 gespritzt, siehe Fig. 2. Weiterhin ist aus Fig. 1 zu erkennen, daß das durch die Durchbrüche 7 hindurch gespritzte Material des Dichtkörpers 4 auf der dem Dichtkörper 4 abgewandten Seite des Betätigungsabschnittes 3 austritt und zu einem ringförmigen Steg 8 vereinigt ist. Dieser ringförmige Steg 8 liegt vorzugsweise in einer Nut 9 des Betätigungsabschnittes 3. Durch diese Ausbildung wird der Betätigungsabschnitt 3 an seinen beiden gegenüberliegenden Flächen von dem Dichtkörper 4 umfaßt, so daß nach Erkalten des Dichtkörpers 4 und der hierdurch bedingten Kontraktion des Dichtkörpermaterials der Dichtkörper 4 unter axialer Vorspannung an den gegenüberliegenden Flächen des Betätigungsabschnittes 3 anliegt. Hierdurch wird eine Materialverbindung durch Adhäsion zwischen den Materialien des Betätigungsabschnittes 3 und des Dichtkörpers 4 erreicht.

Weiterhin ist in Fig. 1 dargestellt, daß der Dichtkörper 4 zweckmäßigerweise kegelstumpfförmig ausgebildet ist. Die größere Kegelstumpf-Endfläche liegt an dem Betätigungsabschnitt 3 an. Die Seitenflächen des Dichtkörpers können aber auch im Querschnitt gesehen etwa paraboloidförmig verlaufen. Weiterhin ist es zweckmäßig, wenn der Schraubenschaft 2 in einer zentrischen Ausnehmung 11 des Dichtkörpers 4 verläuft. Die zentrische Ausnehmung 11 kann sich in den Betätigungsabschnitt 3 erstrecken. Der Durchmesser der zentrischen Ausnehmung 11 vergrößert sich zweckmäßigerweise von der Innenseite der zentrischen Ausnehmung 11 zu deren Öffnung hin. Durch diese Ausbildung des Dichtkörpers 4 wird bei einer schrägen Einschraublage der erfindungsgemäßen Schraube erreicht, daß sich im angezogenen Zustand der Dichtkörper 4 in die zentrische Ausnehmung 11 hinein verformen kann. Zudem begünstigt die Ausbildung des Dichtkörpers 4 als Kegelstumpf die Abdichtfunktion bei Schrägstellung der Schraube, wobei durch die rotationssymmetrische Ausbildung die erfindungsgemäße Abdichtwirkung in jeder beliebigen Schrägstellung erreicht wird. Weiterhin ist in Figuren 1 und 3 zu erkennen, daß der Betätigungsabschnitt 3 an seiner dem Dichtkörper 4 zugekehrten Stirnfläche gleichförmig umfangsgemäß angeordnete, radial ausgebildete Mitnehmerstege 12 aufweist. Diese Mitnehmerstege 12 bilden mit dem Dichtkörper 4, in den sie hineinragen, eine formschlüssige Verbindung. Am Umfang des Betätigungsabschnittes 3 ist ein umlaufender Randsteg 13 vorhanden, dessen Höhe etwa der Höhe der Mitnehmerstege 12 entspricht, und der den Dichtkörper 4 an dessen Umfang umschließt. Zwischen den radial äußeren Enden der Mitnehmerstege 12 und dem Randsteg 13 ist in der Stirnfläche des Betätigungsabschnitts 3 eine Ringnut 15 eingeformt. Innerhalb dieser Ringnut 15 verlaufen die Durchbrüche 7.

Der Schraubenschaft 2 besteht zweckmäßigerweise aus einem Stahl, insbesondere einem vergütbaren Stahl. Es kann jedoch auch ein Edelstahlmaterial verwendet werden. Weiterhin kann es zweckmäßig sein, wenn das Gewinde 14 des Schraubenschaftes 2 als selbstschneidendes Gewinde, bzw. als materialfurchendes Gewinde, ausgebildet ist. Es kann jedoch auch ein metrisches Gewinde sein. Auch kann am Ende des Schaftes eine Bohrspitze ausgebildet sein.

So kann das erfindungsgemäße Verbindungselement als Nagel oder Einschlaganker hergestellt werden. In diesem Fall ist der Betätigungsabschnitt als Nagelkopf oder als Schlagkopf sowie der Schaft als gewindefreier Nagelschaft oder dergleichen ausgebildet. Die erfindungsgemäße Schraube eignet sich insbesondere für die Herstellung von Dach- und Fassadenkonstruktionen. Der Dichtkörper 4 ist insbesondere hinsichtlich seiner Dicke derart dimensioniert, daß große Toleranzen ausgeglichen werden können und ein weiter Schrägstellungsbereich der erfindungsgemäßen Schraube ohne Verlust der Dichtwirkung abgedeckt werden kann. Der Betätigungsabschnitt kann einen Außenvier oder -sechskant besitzen. Wie auch im Betätigungsabschnitt verschiedenste Einsatzschlitze zum Einsetzen vom Schraubendrehern vorhanden sein können.

## Patentansprüche

1. Verbindungselement, bestehend aus einem Kopf (1) mit einem endseitigen Betätigungsabschnitt (3) aus einem ersten Material und aus einem Verbindungsschaft (2), wobei der Kopf (1) einen zwischen diesem und dem Verbindungsschaft (2) liegenden, einen Dichtkörper (4) bildenden Abschnitt aufweist, der aus einem zweiten, elastisch verformbaren und dichtenden Material besteht,
**dadurch gekennzeichnet,** daß der Dichtkörper (4) mit dem Betätigungsabschnitt (3) zumindest in Umfangsrichtung gesehen drehfest formschlüssig verbunden ist, und die aneinander anliegenden Flächen des Betätigungsabschnittes (3) und des Dichtkörpers (4) gegen Materialablösung gesichert spaltfrei materialschlüssig verbunden sind.

2. Verbindungselement nach Anspruch 1,
**dadurch gekennzeichnet,** daß der Betätigungsabschnitt (3) aus Hartkunststoff, insbesondere Polypropylen besteht und mit dem Verbindungsschaft (2) über einen Verankerungsabschnitt (6) verbunden ist.

3. Verbindungselement nach Anspruch 1 oder 2,
**dadurch gekennzeichnet,** daß der Verankerungsabschnitt (6) formschlüssig von dem Betätigungsabschnitt (3) umfaßt, insbesondere umspritzt ist.

4. Verbindungselement nach einem der Ansprüche 1 bis 3, **dadurch gekennzeichnet,** daß der Dichtkörper (4) aus einem Weichkunststoff, insbesondere einem thermoplastischen Material besteht.

5. Verbindungselement nach einem der Ansprüche 1 bis 4, **dadurch gekennzeichnet,** daß der Dichtkörper (4) kegelstumpfförmig oder paraboloidförmig ausgebildet ist, wobei seine größere Endfläche an dem Betätigungsabschnitt (3) anliegt.

6. Verbindungselement nach einem der Ansprüche 1 bis 5, **dadurch gekennzeichnet,** daß der Verbindungsschaft (2) in einer zentrischen Ausnehmung (11) des Dichtkörpers (4) und gegebenenfalls des Betätigungsabschnittes (3) verläuft.

7. Verbindungselement nach einem der Ansprüche 1 bis 6, **dadurch gekennzeichnet,** daß der Dichtkörper (4) an den Betätigungsabschnitt (3) angespritzt ist und in dem Betätigungsabschnitt (3) konzentrisch zur Mittellängsachse X-X der Schraube, vorzugsweise auf einem Kreis, axial verlaufende Durchbrüche (7) ausgebildet sind, die von dem Material des Dichtkörpers (4) durchdrungen sind.

8. Verbindungselement nach Anspruch 7,
**dadurch gekennzeichnet,** daß das durch die Durchbrüche (7) des Betätigungsabschnittes (3) verlaufende Material des Dichtkörpers (4) auf der dem Dichtkörper (4) abgewandten Seite des Betätigungsabschnittes (3) austritt und zu einem Ringsteg (12) vereinigt ist.

9. Verbindungselement nach einem der Ansprüche 1 bis 8, **dadurch gekennzeichnet,** daß der Betätigungsabschnitt (3) an seiner dem Dichtkörper (4) zugekehrten Stirnfläche gleichförmig umfangsgemäß angeordnete, radial ausgerichtete Mitnehmerstege (12) aufweist, die in den Dichtkörper (4) formschlüssig hineinragen.

10. Verbindungselement nach einem der Ansprüche 1 bis 9, **dadurch gekennzeichnet,** daß an dem Betätigungsabschnitt (3) ein umlaufender Randsteg (13) vorhanden ist, dessen Höhe etwa der Höhe der Mitnehmerstege (12) entspricht, der den Dichtkörper (4) an dessen Umfang umschließt.

11. Verbindungselement nach einem der Ansprüche 1 bis 10, **dadurch gekennzeichnet,** daß zwischen dem radial äußeren Enden der Mitnehmerstege (12) und dem Randsteg (13) in der Stirnfläche des Betätigungsabschnittes (3) eine Ringnut (15) eingeformt ist, und innerhalb dieser Ringnut (15) vorzugsweise die Durchbrüche (7) verlaufen.

12. Verbindungselement nach einem der Ansprüche 1 bis 11, **dadurch gekennzeichnet,** daß sich die zentrische Ausnehmung (11) von innen nach außen in ihrem Durchmesser erweitert.

13. Verbindungselement nach einem der Ansprüche 1 bis 12, **dadurch gekennzeichnet,** daß der Verbindungsschaft (2) aus einem Stahl, insbesondere einem vergütbaren Stahl oder einem Edelstahl besteht.

14. Verbindungselement nach einem der Ansprüche 1 bis 13, **dadurch gekennzeichnet,** daß der Verbindungsschaft (2) ein Gewinde (14) aufweist, das als selbstschneidendes, materialfurchendes Gewinde oder metrisches Gewinde oder dergleichen ausgebildet ist.

## Claims

1. Fastening element, comprising a head (1) with an actuating portion (3) at the end, consisting of a first material, and comprising a fastening shank (2), the head (1) having a portion which lies between it and the fastening shank (2) and forms a sealing member (4), which consists of a second, elastically deformable and sealing material, characterized in that the sealing member (4) is positively connected to the actuating portion (3) in a rotationally fixed manner, at least seen in the circumferential direction, and the surfaces bearing against one another of the actuating portion (3) and of the sealing member (4) are integrally connected without any gap and safeguarded against material detachment.

2. Fastening element according to Claim 1, characterized in that the actuating portion (3) consists of rigid plastic, in particular polypropylene, and is connected to the fastening shank (2) via an anchoring portion (6).

3. Fastening element according to Claim 1 or 2, characterized in that the anchoring portion (6) is positively enclosed, in particular encapsulated, by the actuating portion (3).

4. Fastening element according to one of Claims 1 to 3, characterized in that the sealing member (4) consists of a flexible plastic, in particular a thermoplastic material.

5. Fastening element according to one of Claims 1 to 4, characterized in that the sealing member (4) is of a frustoconical or paraboloidal form, its larger end face bearing against the actuating portion (3).

6. Fastening element according to one of Claims 1 to 5, characterized in that the fastening shank (2) runs in a central clearance (11) of the sealing member (4) and, if appropriate, of the actuating portion (3).

7. Fastening element according to one of Claims 1 to 6, characterized in that the sealing member (4) is moulded onto the actuating portion (3) and in the actuating portion (3) there are formed concentrically with respect to the centre longitudinal axis X-X of the screw, preferably on a circle, axially running openings (7), which are penetrated by the material of the sealing member (4).

8. Fastening element according to Claim 7, characterized in that the material of the sealing member (4) running through the openings (7) of the activating portion (3) leaves on the side of the actuating portion (3) facing away from the sealing member (4) and is unified to form an annular web (12).

9. Fastening element according to one of Claims 1 to 8, characterized in that the actuating portion (3) has on its end face facing the sealing member (4) uniformly circumferentially arranged, radially aligned driving webs (12), which positively protrude into the scaling member (4).

10. Fastening element according to one of Claims 1 to 9, characterized in that on the actuating portion (3) there is a peripheral border web (13), the height of which corresponds approximately to the height of the driving webs (12) and which encloses the sealing member (4) at the circumference of the latter.

11. Fastening element according to one of Claims 1 to 10, characterized in that an annular groove (15) is formed between the radially outer ends of the driving webs (12) and the border web (13) in the end face of the actuating portion (3), and the openings (7) preferably run inside this annular groove (15).

12. Fastening element according to one of Claims 1 to 11, characterized in that the central clearance (11) widens in its diameter from the inside outwards.

13. Fastening element according to one of Claims 1 to 12, characterized in that the fastening shank (2) consists of a steel, in particular a heat-treatable steel or a high-grade steel.

14. Fastening element according to one of Claims 1 to 13, characterized in that the fastening shank (2) has a thread (14), which is designed as a self-tapping, material-furrowing or metric thread or the like.

## Revendications

1. Elément d'assemblage comprenant une tête (1) munie à son extrémité d'une section d'actionnement (3) réalisée en un premier matériau, et une tige d'assemblage (2), la tête (1) présentant une portion formant corps d'étanchéité (4), située entre cette section (3) et la tige d'assemblage (2) et réalisée en un deuxième matériau élastiquement déformable et étanche,
caractérisé en ce que le corps d'étanchéité (4) est relié de par sa forme à la section d'actionnement (3) au moins dans la direction périphérique pour résister à une rotation, et que les surfaces appliquées l'une sur l'autre de la section d'actionnement (3) et du corps d'étanchéité (4) sont reliées par matière et sans fissures pour résister à un détachement de matière.

2. Elément d'assemblage selon la revendication 1,
caractérisé en ce que la section d'actionnement (3) est réalisée en une résine synthétique dure, en particulier en un polypropylène, et reliée à la tige d'assemblage (2) par une section d'ancrage (6).

3. Elément d'assemblage selon la revendication 1 ou 2,
caractérisé en ce que la section d'ancrage (6) est entourée de par sa forme, en particulier par pulvérisation, par la section d'actionnement (3).

4. Elément d'assemblage selon l'une des revendications 1 à 3,
caractérisé en ce que le corps d'étanchéité (4) est réalisé en une matière synthétique molle, en particulier un matériau thermoplastique.

5. Elément d'assemblage selon l'une des revendications 1 à 4,
caractérisé en ce que le corps d'étanchéité (4) a une forme tronconique ou parabolique, sa surface terminale de plus grandes dimensions étant appliquée sur la section d'actionnement (3).

6. Elément d'assemblage selon l'une des revendications 1 à 5,
caractérisé en ce que la tige d'assemblage (2) s'étend dans un évidement central (11) du corps d'étanchéité (4) et éventuellement de la section d'actionnement (3).

7. Elément d'assemblage selon l'une des revendications 1 à 6,
caractérisé en ce que le corps d'étanchéité (4) est appliqué sur la section d'actionnement (3) par pulvérisation, et que des ajours (7) qui s'étendent axialement sont formés dans la section d'actionnement (3) concentriquement à l'axe longitudinal central X-X de la vis, de préférence sur un cercle, la matière du corps d'étanchéité (4) pénétrant dans ces ajours.

8. Elément d'assemblage selon la revendication 7,
caractérisé en ce que la matière du corps d'étanchéité (4) qui passe par les ajours (7) de la section d'actionnement (3) sort du côté opposé au corps d'étanchéité (4) de la section d'actionnement (3), et est réunie pour former une nervure annulaire (12).

9. Elément d'assemblage selon l'une des revendications 1 à 8,
caractérisé en ce que la section d'actionnement (3) présente sur sa face frontale en regard du corps d'étanchéité (4) des nervures d'entraînement (12) orientées radialement et réparties uniformément sur la périphérie, ces nervures faisant saillie de par leur forme dans le corps d'étanchéité (4).

10. Elément d'assemblage selon l'une des revendications 1 à 9,
caractérisé en ce que l'élément d'actionnement (3) comporte une nervure de bord périphérique (13) dont la hauteur correspond sensiblement à la hauteur des nervures d'entraînement (12), cette nervure entourant le corps d'étanchéité (4) sur sa périphérie.

11. Elément d'assemblage selon l'une des revendications 1 à 10,
caractérisé en ce que, entre les extrémités radialement extérieures des nervures d'entraînement (12) et la nervure de bord (13), une rainure annulaire (15) est moulée dans la face frontale de la section d'actionnement (3), et que les ajours (7) sont de préférence situés dans cette rainure annulaire (15).

12. Elément d'assemblage selon l'une des revendications 1 à 11,
caractérisé en ce que le diamètre de l'évidement central (11) s'élargit de l'intérieur vers l'extérieur.

13. Elément d'assemblage selon l'une des revendications 1 à 12,
caractérisé en ce que la tige d'assemblage (2) est réalisée en un acier, en particuier un acier à trempe et revenu ou un acier spécial.

14. Elément d'assemblage selon l'une des revendications 1 à 13,
caractérisé en ce que la tige d'assemblage (2) présente un filet autocoupant (14) pénétrant dans la matière, un filet métrique ou analogue.
